# EUROPÄISCHE PATENTSCHRIFT

(11) **EP 1 025 894 B1**
(45) Veröffentlichungstag und Bekanntmachung des Hinweises auf die Patenterteilung: **11.09.2002**
(21) Anmeldenummer: 00103616.9
(22) Anmeldetag: 21.02.2000
(51) Int. Cl.: B01D 53/34, B01D 53/10, F23J 15/00, B01J 20/00, B01D 53/04

(54) **Verfahren sowie Sorbens zur trockenen Reinigung von Abgasen**
Method and adsorbent for dry exhaust gas purification
Procédé ainsi que l'adsorbant pour la purification à sec de gaz d'échappement

(43) Veröffentlichungstag der Anmeldung: 09.08.2000
(73) Patentinhaber: RWE Rheinbraun Aktiengesellschaft, 50935 Köln (DE)
(72) Erfinder: Wirling, Jürgen, Dipl.-Ing., 50354 Hürth (DE); Esser-Schmittmann, Wolfgang, Dr.-Ing., 52388 Nörvenich (DE)
(74) Vertreter: Patentanwälte Lippert, Stachow, Schmidt & Partner

(56) Entgegenhaltungen:
- DE-A- 4 100 645
- DE-A- 4 339 072
- DE-A- 19 620 129
- DE-A- 19 623 981
- US-A- 5 002 741

## Beschreibung

Die Erfindung betrifft ein Verfahren zur trockenen Reinigung von nicht entstaubten Abgasen aus Sinteranlagen, Hüttenwerken oder sekundärmetallurgischen Schmelzanlagen, bei welchem pulverförmige Sorbentien, bestehend aus Braunkohlenkoks und/oder Aktivkohle mit dem Abgasstrom in Kontakt gebracht werden.

Ein solches Verfahren ist beispielsweise in der Zeitschrift Chemie-Ingenieurtechnik 9/95, Seiten 1208 und 1209, beschrieben. Verbrennungsabgase aus Müllverbrennungsanlagen und insbesondere aus Sinteranlagen sind häufig mit Dioxinen und Furanen belastet. Insbesondere beim Sinterprozeß bilden sich polyzyklische und polyhalogenisierte Kohlenwasserstoffe sowie polyhalogenisierte Dibenzo-Dioxine (PCDD) und polyhalogenisierte Dibenzo-Furane (PCDF), die mit dem Abgasstrom aus der Sinteranlage ausgetragen werden. Diese Schadstoffbelastung insbesondere bei Abgasen aus metallurgischen Prozessen ist hinlänglich bekannt und beispielsweise auch in vorstehend zitierter Veröffentlichung beschrieben. Als Adsorptionsmittel zur Entfernung von Dioxinen und Furanen aus solchen Abgasen hat sich insbesondere Braunkohlenkoks als besonders geeignet erwiesen, da mit Braunkohlen als Sorbens Abscheidungsgrade bis zum 99,8 % erreicht werden können. Anstelle von Braunkohlenkoks findet häufig zur Feinreinigung von Abgasen auch Aktivkohle Anwendung.

Die Abgasreinigung mit diesen kohlenstoffhaltigen Adsorbentien hat besondere Vorzüge. Einerseits ist die Adsorptionsleistung außerordentlich hoch, andererseits ist eine thermische Nutzung solcher kohlenstoffhaltiger Adsorbentien möglich, beispielsweise durch Rückführung dieser in den thermischen Prozeß unter Ausnutzung deren Brennwerts oder Heizwerts. Dabei können die an die Adsorbentien gebundenen organischen Schadstoffe oxidativ zersetzt werden. Eine eventuell problematische Deponierung der schadstoffbelasteten Sorbentien entfällt.

In der DE 196 23 981.8 wird beispielsweise vorgeschlagen, Koks aus Braunkohle als pulverförmiges Sorbens in den Abgasstrom zu geben, welches von diesem mitgeführt wird, wobei die Adsorption der schädlichen Inhaltsstoffe durch die in Form einer Flugstaubwolke im Abgasstrom befindlichen Sorbentien erfolgt und der Abgasstrom durch einen Elektrofilter geleitet wird, in dem zumindest ein Teil der beladenen Sorbentien aus dem gereinigten Abgas entfernt werden.

Die Mischung der im Abgasstrom enthaltenen kohlenstoffhaltigen Sorbentien wie Braunkohlenkoks mit den in den nicht vorentstaubten Abgasen des Sinterprozeß enthaltenen Stäuben kann je nach Art und Zusammensetzung der Stäube eine Feststoff-Suspension ergeben, die eine erhöhte Entzündungsneigung aufweist. Die Ursache hierfür ist weitestgehend ungeklärt, zumal die Abgaszusammensetzungen je nach metallurgischem Prozeß stark variieren.

In der deutschen Patentanmeldung 199 40 683.9 wird ein Verfahren zur trockenen Abgasreinigung der vorstehend beschriebenen Art vorgeschlagen, Zeolithe bzw. zeolithhaltiges Mineralgestein als oberflächenaktive Bestandteile in Mischung mit Braunkohlenkoks als staubförmiges Sorbens dem Abgasstrom aufzugeben, wobei das Mischungsverhältnis zwischen Braunkohlenkoks und Zeolith bzw. zeolithhaltigem Mineralgestein in Abhängigkeit von der Art, Zusammensetzung und Menge des im Abgas enthaltenene Prozeßstaubs so eingestellt werden soll, dass eine Inertisierung der Feststoffe gewährleistet ist. Ein solches Verfahren ist grundsätzlich geeignet, die Entzündungsneigung der Mischung aus Prozeßstaub und Sorbentien zu verringern, so dass die Brand- un Explosionsschutzanforderung erfüllt sind.

Ein Verfahren zur Abscheidung von sauren Schadstoffen aus Gasen und Abgasen ist beispielsweise aus der DE 41 00 645 A1 bekannt. Dieses Verfahren betrifft die Minimierung der Restemission von Schwefeldioxid und Chlorwasserstoff mit Hilfe von basischen Substanzen, denen zusätzlich noch basische stickstoffhaltige Verbindungen und gegebenenfalls Activ kohle oder Braunkohle - Herdofenkoks zugemischt werden.

Aus der US-PS 5,002,741 ist ein Verfahren zur Verringerung der SOₓ und NOₓ-Belastung von Abgasen bekannt, bei welchem dem Abgasstrom pulverförmige, kohlenstoffhaltige Sorbentien in Mischung mit SOₓ und NOₓ bildenden Reagenzien aufgegeben werden.

Die Mischung von im Abgasstrom enthaltenen kohlenstoffhaltigen Sorbentien wie Braunkohlenkoks mit den in den nicht vorentstaubten Abgasen des Sinterprozeß enthaltenen Stäuben kann je nach Art und Zusammensetzung der Stäube eine erhöhte Entzündungsneigung aufweisen.

Der Erfindung liegt daher die Aufgabe zugrunde, ein Verfahren zur im wesentlichen trockenen Reinigung von Abgasen aus thermischen Prozessen bereitzustellen, das bei Verwendung kohlenstoffhaltiger Adsorbentien hinreichend Sicherheit hinsichtlich Entzündungsneigung besitzt und bei welchem nahezu keinerlei Beeinträchtigung der Adsorptionsleistung in Kauf genommen werden muß.

Der Erfindung liegt weiterhin die Aufgabe zugrunde, ein Sorbens zur Verwendung bei einem solchen Verfahren bereitzustellen.

Die Aufgabe wird zunächst gelöst durch die Merkmale des Anspruchs 1.

Solche Katalysationsinhibitoren können in signifkant geringeren Mengen zugegeben werden als nicht reaktive Substanzen, wie es beispielsweise Zeolithe sind. Zeolithe besitzen zwar ebenfalls gute adsorbtive Eigenschaften, jedoch bewirkt die Zugabe solcher inerten Substanzen lediglich eine "Verdünnung" der nicht inerten Bestandteile der Mischung aus Prozeßstaub und Sorbentien. Eine solche "Verdünnung" erfordert naturgemäß eine verhältnismäßig hohe Dosierung des inertisierenden Zusatzes (bis zu 30 Gew.-% bezogen auf die gesamte Mischung Prozeßstaub und Sorbentien), was verhältnismäßig aufwendig ist und dem gegenüber eine höhere Einschränkung der Adsorptionsleistung der Sorbentien bewirkt.

Obwohl bislang nicht zuverlässig geklärt ist, warum eine Mischung aus Prozeßfilterstaub und Aktivkohle oder Braunkohlenkoks gegenüber den einzelnen Bestandteilen der Mischung eine erhöhte Entzündungsneigung besitzt, geht die Erfindung davon aus, daß insbesondere bei sekundärmetallurgischen Prozessen, wie beispielsweise Sinterprozessen, die im Prozeßstaub enthaltenen Metallionen eine Katalyse hin zu einer beschleunigten Kohlenstoffoxidation bewirken. Hierfür könnten verschiedene Mechanismen verantwortlich sein. Beispielsweise kann eine Ablösung einzelner Kohlenstoffatome an Kohlenstoff-Katalysator-Grenzflächen und die anschließende Diffusion dieser Kohlenstoffatome mittels eines Katalysators zur oxidierenden Atmosphäre erfolgen.

Die Metallspezies kann mit Sauerstoff Intermediate bilden, die zur Oxidation benachbarter Kohlenstoffatome führen oder die Metallspezies kann molekularen Sauerstoff in reaktive Sauerstoffatome (Radikale) dissozieren, die dann zu den aktiven Kohlenstoffstellen diffundieren.

Versuchsweise hat das Verfahren gemäß der Erfindung schon bei außerordentlich geringer Dosierung von Katalysationsinhibitoren gute Ergebnisse geliefert.

Als Katalysationsinhibitoren finden Verbindungen Anwendung, die Komplexe mit Metallionen, vorzugsweise mit Kupfer- und/oder Eisenionen bilden können oder Substanzen, die solche Komplexbildner freisetzen können. Insbesondere in Prozeßstäuben enthaltene Kupfer- und Eisen-Ionen können kaltalytische Reaktionen hervorrufen. Durch die Zugabe der vorstehend beschriebenen Verbindungen wird in erster Linie eine metallkatalysierte Kohlenstoffoxidation mit einfachen Mitteln unterbunden oder verringert und folglich auch die Entzündungsneigung verringert.

Vorzugsweise finden als Katalysationsinhibitoren Amine oder Harnstoffe Anwendung. Aus der Gruppe der Amine kommen beispielsweise Ethanolamine und Triethanolamine in Betracht.

Gemäß einer bevorzugten Variante des Verfahrens wird eine Menge von 1 bis 10 Gew.-%, vorzugsweise 1 bis 2 Gew.-% Inhibitoren bezogen auf die dem Abgasstrom aufgegebene Menge an Sorbentien eingesetzt.

Die Inhibitoren können parallel zu den Sorbentien dem Abgasstrom aufgegeben werden. Beispielsweise können diese in wässriger Phase in unmittelbarer Nähe der Aufgabe der Sorbentien in den Abgasstrom eingedüst werden. Aufgrund der verhältnismäßig hohen Abgastemperatur würden diese dann im Abgas in der Gasphase vorliegen.

Bevorzugt werden die Inhibitoren in Mischung mit den Sorbentien dem Abgasstrom aufgegeben. Nach einer besonders bevorzugten Variante des Verfahrens gemäß der Erfindung ist vorgesehen, daß die Sorbentien vor dem Kontakt mit dem Abgas mit Inhibitoren dotiert werden.

Aus Kostengründen ist vorgesehen, daß als Sorbens ausschließlich Braunkohlenkoks Anwendung findet, der, wie eingangs schon erwähnt, hervorragende adsorbtive Eigenschaften aufweist.

Es kann beispielsweise vorgesehen sein, daß der Braunkohlenkoks mit Inhibitoren in wässriger Phase benetzt wird, bevor er mit dem Abgasstrom in Kontakt gelangt. Besonders preisgünstig ist es, den Braunkohlenkoks mit in Wasser gelösten Harnstoffen zu benetzen.

Zweckmäßigerweise werden die Sorbentien so in den Abgasstrom gegeben und von diesem mitgeführt, daß die Adsorption der schädlichen Inhaltsstoffe des Abgases in Form einer Flugstaubwolke der im Abgasstrom befindlichen Sorbentien erfolgt, wobei wenigstens ein Teil der schadstoffbeladenen Sorbentien abgeschieden werden, wobei die Menge der Sorbentien, deren spezifische Oberfläche und deren Verweilzeit im Abgasstrom so eingestellt werden, daß ein im Abgasstrom nach dem Entfernen der Sorbentien noch verbleibender Restgehalt an schädlichen Inhaltsstoffen die zulässige Höchstgrenze nicht überschreitet. Diese Vorgehensweise ist aus der DE 199 40 683.9 bekannt.

Die schadstoffbelasteten Sorbentien werden zweckmäßigerweise in den thermischen Prozeß zurückgeführt, beispielsweise könne diese wieder in den Sinterprozeß eingeführt werden, wodurch eine oxidative Zersetzung der organischen Schadstoffe, wie beispielsweise Dioxine und Furane, erfolgen kann und wobei gleichzeitig eine teilweise energetische Nutzung der schadstoffbeladenen Sorbentien selbst erfolgen kann.

Da die Adsorptionskapazität auch von der Korngröße des Sorbens abhängt, ist zweckmäßigerweise das Sorbens möglichst feinkörnig, gegebenenfalls staubförmig in den Abgasstrom einzuführen. Die durchschnittliche Korngröße sollte vorteilhafterweise weniger oder gleich 0,5 mm betragen, gegebenenfalls sogar weniger oder gleich 0,1 mm.

Diese geringe Korngröße hat zudem den Vorteil, daß die Mindestgeschwindigkeit, mit welcher der Abgasstrom durch die Reaktionsstrecke geführt wird, verhältnismäßig gering sein kann, beispielsweise nur 5 bis 15 m/s betragen kann, ohne dass das Sorbens sich absetzt oder die gleichmäßige Verteilung desselben über den Querschnitt des Abgasstroms eine merkliche Verschlechterung erfährt. Aus dem Anfangsgehalt an schädlichen Inhaltsstoffen und dem nach der Reinigung noch zulässigen Restgehalt derselben ergibt sich die Verweilzeit der Sorbentien im Abgasstrom, die erforderlich ist, um das gewünschte Ergebnis zu erreichen. Da die Verweilzeit abhängt von der Länge der Reaktionsstrecke und der Strömungsgeschwindigkeit des Abgases, welche insbesondere bei bestehenden Anlagen nicht beliebig variiert werden kann, soll durch die Variation der Feinheit der Sorbentien der äußere Stofftransport der Schadstoffe zum Sorbens verbessert werden, wodurch die gleichzeitige Reinigungsleistung auch bei geringeren Verweilzeiten in der Reaktionsstrecke erreicht werden kann. Die Zugabe der Sorbensmischung soll vorteilhafterweise entgegen der Abgasströmung ausgerichtet sein, wodurch auf kürzester Strecke eine effektive Verteilung der Koksstaubpartikel im Abgasstrom zu erreichen ist. Ein weiterer Vorteil dieser Ausführung ist, dass durch die hohen Relativgeschwindigkeiten zwischen Sorbens und der Abgasströmung die Bedingungen für die Schadstoffabscheidung wesentlich verbessert werden.

Das Mischungsverhältnis der Sorbentien mit dem im Abgasstrom enthaltenen Prozeßstaub kann zwischen 5:95 und 95:5 betragen.

Eine Vorentstaubung der Abgase ist bei dem Verfahren gemäß der Erfindung weder erforderlich noch erwünscht. Der im Abgas enthaltene Prozeßstaub kann mit den Sorbentien gemeinsam in einem Elektrofilter oder Tuchfilter aus dem Abgasstrom entfernt werden.

Die der Erfindung zugrundeliegende Aufgabe wird durch die Merkmale des Anspruchs 12 gelöst.

Als Katalysationsinhibitoren sind Komplexe mit Metallionen, vorzugsweise mit Kupfer- und/oder Eisenionen bildende Verbindungen oder deren Vorstufen enthalten.

Beispielsweise können als Katalysationsinhibitoren Amine oder Harnstoffe vorgesehen sein. Als Amine kommen beispielsweise Ethanolamine und Triethanolamine in Betracht.

Es kann vorgesehen sein, dass die nicht inerten Bestandteile des Sorbens mit Katalysationsinhibitoren, vorzugsweise in Form von Harnstoffen, dotiert sind. Bei der Verwendung von Braunkohlen-Herdofenkoks als inerter Bestandteil des Sorbens kann eine Dotierung desselben bei dessen Wasserkonditionierung vorgenommen worden sein.

Alternativ können als Zusatz trockene, pulverförmige Substanzen vorgesehen sein, die mit den oberflächenaktiven Substanzen innig vermischt sind. Beispielsweise könne aufgemahlene kristalline Harnstoffe mit Braunkohlen-Herdofenkoks vermischt sein, wobei die durchschnittliche Korngröße der Harnstoffe vorzugsweise etwa der durchschnittlichen Korngröße des Braunkohlen-Herdofenkokses entspricht.

Die Erfindung wird nachstehend anhand eines in den Zeichnungen dargestellten stark vereinfachten Ausführungsbeispiels dargestellt. Es zeigen:
- Fig. 1: das Fließschema eines Verfahrens zur Abgasreinigung einer Sinterbandanlage,
- Fig. 2: im Querschnitt einen Abschnitt der Reaktionsstrecke mit dahin angeordneten Einblasdüsen für das Sorbens,
- Fig. 3: ein Schnitt nach der Linie III-III in Fig. 2.

Das aus der Sinterbandanlage 1 abgesaugte Prozessgas 2, welches mit schädlichen Inhaltsstoffen beladen ist, durchläuft mit einer Temperatur oberhalb des Taupunkts und einer Geschwindigkeit von beispielsweise 5 bis 15 m/s eine Reaktionsstrecke 3, in welcher es mit fein verteilten pulverförmigen Sorbentien intensiv vermischt wird. Entsprechend den erfindungsgemäß vorgeschlagenen Varianten kann der Braunkohlenkoks vorher mit Katalysationsinhibitoren, beispielsweise mit Harnstoff dotiert worden sein. Alternativ kann der Braunkohlenkoks in Mischung, beispielsweise mit 1 bis 2 Gew.-% an Katalysationsinhibitoren, beispielsweise in Form von gemahlenem kristallinem, pulverförmigem Harnstoff vorliegen. Auch eine vorherige Benetzung des Braunkohlenkoks mit Katalysationsinhibitoren in wässriger Phase, vor dessen Zugabe in den Abgasstrom, kann vorgesehen sein. Am Beginn der Reaktionsstrecke 3 ist eine Zugabeeinrichtung 4 für die Sorbentien angeordnet. Zur innigen Vermischung und gleichmäßigen Verteilung der Sorbentien im Abgasstrom über den Querschnitt der die Reaktionsstrecke 3 bildenden Leitung werden die Sorbentien an mehreren Stellen in den Abgasstrom eingetragen.

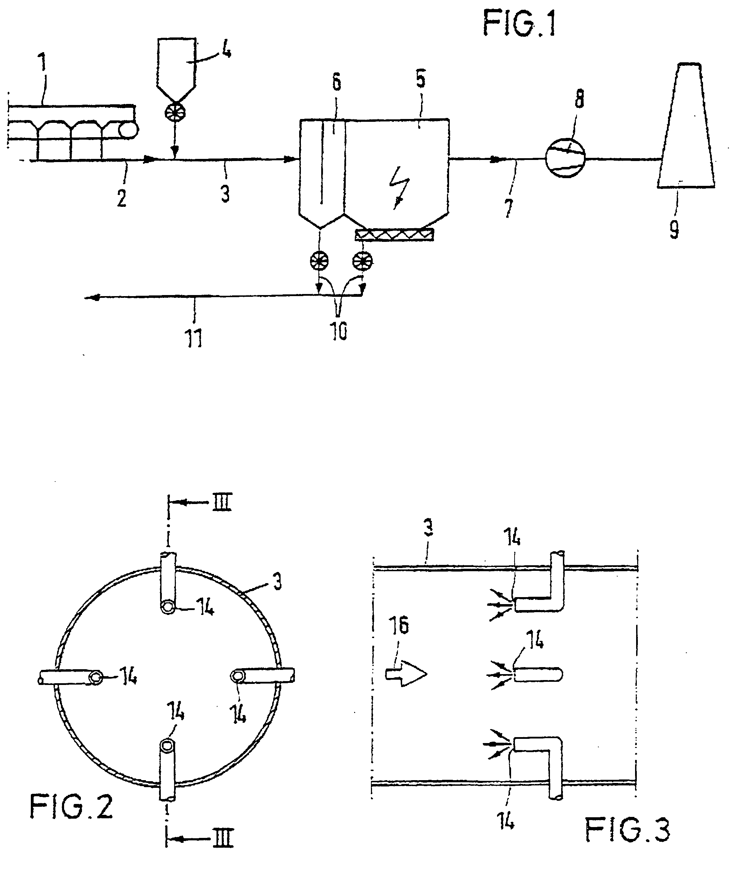

Die Fig. 2 und 3 zeigen, daß bei dem in der Zeichnung dargestellten Ausgeführungsbeispiel die Sorbentien in wenigstens -einer Ebene der Reaktionsstrecke 3 durch vier über den Querschnitt verteilte Einblasdüsen 14 in den Abgasstrom eingeblasen werden, und zwar entgegen der Strömungsrichtung 16 desselben. Abweichend von der Darstellung der Zeichnung können die Sorbentien auch unter einem anderen Winkel zur Strömungsrichtung 16 bzw. zur Längsachse und/oder in mehreren in Strömungsrichtung hintereinander angeordneten Stellen und/oder Ebenen der Reaktionsstrecke 3 eingeblasen werden. Wenn die Katalysationsinhibitoren nicht in Mischung mit dem Braunkohlenkoks vorliegen oder der Braunkohlenkoks nicht vor Aufgabe in den Abgasstrom entsprechend dotiert wurde, können die Einblasdüsen 14 auch abwechselnd zum Einblasen von Braunkohlenkoks und Katalysationsinhibitoren in wässriger Phase verwendet werden. Die Katalysationsinhibitoren werden bei dieser Vorgehensweise parallel zu dem Braunkohlenkoks in wässriger Phase in den Abgasstrom eingeblasen, wobei diese aufgrund der im Abgasstrom vorherrschenden Temperaturen letztendlich in der Gasphase vorliegen.

Nach Passieren der Reaktionsstrecke 3 tritt das Abgas in das zur Staubabscheidung vorgesehene Elektrofilter 5 ein, dem ein beispielsweise als Zyklon ausgebildeter Vorabscheider vorgeschaltet ist, in welchem die gröberen Kornfraktionen abgetrennt werden. Die nach dem Vorabscheider 6 verbleibende Staubfracht wird in den elektrischen Feldern des Elektrofilters 5 abgeschieden. Das von Schadstoffen zumindest teilweise befreite Abgas 7 wird über ein Gebläse 8 abgezogen und in den Kamin 9 abgegeben. Das im Elektrofilter 5 und gegebenenfalls auch im Vorabscheider 6 abgeschiedene Gemisch aus Prozeßstaub und Sorbens 10 wird über eine Bandanlage 11 dem Sinterprozeß vollständig oder gegebenenfalls auch teilweise zugeführt.

Die Reaktionsstrecke 3 kann somit als Flugstromreaktor aufgefaßt werden.

Bei der Rückführung des Gemischs aus dem Prozeßstaub und mit Schadstoffen beladene Sorbentien in den Sinterprozeß findet eine thermische Zersetzung der Schadstoffe bzw. schädlichen Inhaltsstoffe als auch der Katalysationsinhibitoren statt.

### Bezugszeichenliste

- 1: Sinterbandanlage
- 2: Prozeßgas
- 3: Reaktionsstrecke
- 4: Zugabeeinrichtung
- 5: Elektrofilter
- 6: Vorabscheider
- 7: Abgas
- 8: Gebläse
- 9: Kamin
- 10: Sorbens
- 11: Bandanlage
- 14: Einblasdüsen
- 16: Strömungsrichtung

## Patentansprüche

1. Verfahren zur trockenen Reinigung von nicht entstaubten Metallionen enthalfenden Abgasen aus Sinteranlagen, Hüttenwerken oder sekundärmetallurgischen Schmelzanlagen, bei welchem pulverförmige Sorbentien, bestehend aus Braunkohlenkoks und/oder Aktivkohle mit dem Abgasstrom in Kontakt gebracht werden, **dadurch gekennzeichnet, dass** dem Abgasstrom zusätzlich als Katalysationsinhibitor Verbindungen, die Komplexe mit Metallionen bilden können oder solche Substanzen, die solche Komplexbildner freisetzen können, aufgegeben wird oder der Abgasstrom mit diesem in Kontakt gebracht wird, und dass der katalysations inhibitor in Abhängigkeit von der dem Abgesstrom aufgegebenen Menge an Sorbentien eingeselet wird.

2. Verfahren nach Anspruch 1, **dadurch gekennzeichnet, dass** als Katalysationsinhibitoren Verbindungen, die Komplexe mit Kupfer- und/oder Eisenionen bilden können Anwendung finden.

3. Verfahren nach Anspruch 1 bis 3, **dadurch gekennzeichnet, dass** als Katalysatorinhibitoren Amine oder Harnstoffe Anwendung finden.

4. Verfahren nach einem der Anspruch 1 bis 3, **dadurch gekennzeichnet, dass** eine Menge von 1 bis 10 Gew.-%, vorzugsweise 1 bis 2 Gew.-% Inhibitoren bezogen auf die dem Abgasstrom aufgegebene Menge an Sorbentien eingesetzt wird.

5. Verfahren nach einem der Ansprüche 1 bis 4, **dadurch gekennzeichnet, dass** die Inhibitoren parallel zu den Sorbentien dem Abgasstrom aufgegeben werden.

6. Verfahren nach einem der Ansprüche 1 bis 4, **dadurch gekennzeichnet, dass** die Inhibitoren in Mischung mit den Sorbentien dem Abgasstrom aufgegeben werden.

7. Verfahren nach einem der Ansprüche 1 bis 4, **dadurch gekennzeichnet, dass** die Sorbentien vor dem Kontakt mit dem Abgas mit Inhibitoren dotiert werden.

8. Verfahren nach einem der Ansprüche 1 bis 4, **dadurch gekennzeichnet, dass** die Inhibitoren in den Abgasstrom eingedüst werden.

9. Verfahren nach einem der Ansprüche 1 bis 8, **dadurch gekennzeichnet, dass** als Sorbens ausschließlich Braunkohlekoks Anwendung findet.

10. Verfahren nach einem der Ansprüche 1 bis 9, **dadurch gekennzeichnet, dass** der Braunkohlenkoks mit Inhibitoren in wässeriger Phase benetzt wird, bevor er mit dem Abgasstrom in Kontakt gelangt.

11. Verfahren nach einem der Ansprüche 1 bis 10, **dadurch gekennzeichnet, dass** die Sorbentien so in den Abgasstrom gegeben und von diesem mitgeführt werden, dass die Adsorption der schädlichen Inhaltsstoffe des Abgases in Form einer Flugstaubwolke der im Abgasstrom befindlichen Sorbentien erfolgt, wobei wenigstens ein Teil der schadstoffbeladenen Sorbentien abgeschieden wird, wobei die Menge der Sorbentien, deren spezifische Oberfläche und deren Verweilzeit im Abgasstrom so eingestellt werden, dass ein im Abgasstrom nach dem Entfernen der Sorbentien noch verbleibender Restgehalt an schädlichen Inhaltsstoffen die zulässige Höchstgrenze nicht überschreitet.

12. Sorbens zur trockenen Reinigung von nicht vorentstaubten Abgasen mit oberflächenaktiven Substanzen aus der Gruppe Aktivkohle und/oder Braunkohlenkoks, **gekennzeichnet durch** einen Zusatz an Katalysationsinhibitoren von 1 bis 10 Gew.-%, vorzugsweise 1 bis 2 Gew.-% bezogen auf die Menge an Aktivkohle und/oder Braunkohlenkoks als nicht inerte Bestandteile, wobei die Katalysationsinhibitoren Komplexe mit Metallionen bildende Verbindungen oder deren Vorstufen sind.

13. Sorbens nach Anspruch 12, **dadurch gekennzeichnet, daß** die Katalysationsinhibitoren Komplexe mit Kupfer- und/oder Eisenionen bildende Verbindungen oder deren Vorstufen sind.

14. Sorbens nach einem der Ansprüche 12 oder 13, **dadurch gekennzeichnet, daß** als Katalysationsinhibitoren Amine oder Harnstoffe vorgesehen sind.

15. Sorbens nach einem der Ansprüche 12 bis 14, **dadurch gekennzeichnet, daß** die nicht inerten Bestandteile mit den Katalysationsinhibitoren, vorzugsweise in Form von Harnstoffen dotiert sind.

16. Sorbens nach einem der Ansprüche 12 bis 15, **dadurch gekennzeichnet, daß** als nicht inerter Bestandteil Braunkohlen-Herdofenkoks vorgesehen ist, welcher bei der Wasserkonditionierung mit Katalysationsinhibitoren dotiert wurde.

17. Sorbens nach einem der Ansprüche 12 bis 14, **dadurch gekennzeichnet, daß** die Katalysationsinhibitoren als trockene pulverförmige Substanzen mit den oberflächenaktiven Substanzen innig vermischt sind.

## Claims

1. Method for the dry purification of exhaust gases, which have not been freed of dust and which contain metal ions, from sintering plants, integrated iron and steel works, or secondary metallurgical smelting plants, in which adsorbents in powder form, composed of brown-coal coke and/or activated carbon, are brought into contact with the exhaust-gas flow, **characterized in that** compounds which can form complexes with metal ions or such substances which can liberate such complexing agents are delivered additionally to the exhaust-gas flow as catalysis inhibitors, or the exhaust-gas flow is brought into contact therewith, and **in that** the catalysis inhibitor is introduced in dependence on the quantity of adsorbents delivered to the exhaust-gas flow.

2. Method according to Claim 1, **characterized in that** compounds which can form complexes with copper and/or iron ions are used as catalysis inhibitors.

3. Method according to Claims 1 to 3, **characterized in that** amines or carbamides are used as catalyst inhibitors.

4. Method according to any one of Claims 1 to 3, **characterized in that** a quantity of inhibitors of from 1 to 10% by weight, preferably from 1 to 2 % by weight, relative to the quantity of adsorbents delivered to the exhaust-gas flow, is introduced.

5. Method according to any one of Claims 1 to 4, **characterized in that** the inhibitors are delivered to the exhaust-gas flow in parallel with the adsorbents.

6. Method according to any one of Claims 1 to 4, **characterized in that** the inhibitors are delivered to the exhaust-gas flow mixed with the adsorbents.

7. Method according to any one of Claims 1 to 4, **characterized in that** the adsorbents are doped with inhibitors prior to contact with the exhaust gas.

8. Method according to any one of Claims 1 to 4, **characterized in that** the inhibitors are injected into the exhaust-gas flow.

9. Method according to any one of Claims 1 to 8, **characterized in that** exclusively brown-coal coke is used as adsorbent.

10. Method according to any one of Claims 1 to 9, **characterized in that** the brown-coal coke is wetted with inhibitors in aqueous phase before it comes into contact with the exhaust-gas flow.

11. Method according to any one of Claims 1 to 10, **characterized in that** the adsorbents are supplied into the exhaust-gas flow and carried along thereby in a manner such that the adsorption of the noxious substances contained in the exhaust gas takes place in the form of a fine dust cloud of the adsorbents that are in the exhaust-gas flow, at least a portion of the adsorbents loaded with noxious substances being deposited, the quantity of the adsorbents, their specific surface, and the time for which they remain in the exhaust-gas flow being set in a manner such that a residual content of noxious substances still remaining in the exhaust-gas flow after the removal of the adsorbents does not exceed the permissible upper limit.

12. Adsorbent for the dry purification of exhaust gases, which have not previously been freed of dust, with surface active substances from the group of activated carbon and/or brown-coal coke, **characterized by** an addition of catalysis inhibitors of from 1 to 10 % by weight, preferably from 1 to 2 % by weight, relative to the quantity of activated carbon and/or brown-coal coke, as non-inert components, the catalysis inhibitors being compounds which form complexes with metal ions, or precursors thereof.

13. Adsorbent according to Claim 12, **characterized in that** the catalysis inhibitors are complexes with compounds forming copper and/or iron ions or precursors thereof.

14. Adsorbent according either Claim 12 or Claim 13, **characterized in that** amines or carbamides are provided as catalysis inhibitors.

15. Adsorbent according to any one of Claims 12 to 14, **characterized in that** the non-inert components are doped with the catalysis inhibitors, preferably in the form of carbamides.

16. Adsorbent according to any one of Claims 12 to 15, **characterized in that** brown-coal open-hearth coke is provided as non-inert component and is doped with catalysis inhibitors during the water conditioning.

17. Adsorbent according to any one of Claims 12 to 14, **characterized in that** the catalysis inhibitors are mixed intimately, as dry substances in powder form, with the surface active substances.

## Revendications

1. Procédé pour la purification à sec de gaz d'échappement contenant des poussières ainsi que des ions métalliques et provenant d'installations de frittage, d'usines sidérurgiques ou de fonderies métallurgiques secondaires, au niveau duquel des absorbants sous forme de poudre et composés de coke de lignite et/ou de charbons actifs sont mis en contact avec le flux de gaz d'échappement, **caractérisé en ce qu'**en tant qu'inhibiteurs de catalysation, des composés, susceptibles de former des complexes avec des ions métalliques, ou des substances capables de dégager de tels complexants sont ajoutés au flux de gaz d'échappement ou que ce dernier est mis en contact avec cet inhibiteur de catalysation et que celui-ci est mis en oeuvre en fonction de la quantité d'absorbants ajoutée au flux de gaz d'échappement.

2. Procédé selon la revendication 1, **caractérisé en ce que** des composés, susceptibles de former des complexes avec des ions cuivre et/ou des ions fer, sont utilisés comme inhibiteurs de catalysation.

3. Procédé selon les revendications 1 à 3, **caractérisé en ce que** des amines ou des urées sont utilisées comme inhibiteurs de catalysation.

4. Procédé selon l'une des revendications 1 à 3, **caractérisé en ce qu'**une quantité de 1 à 10 % en poids, de préférence de 1 à 2 % en poids d'inhibiteurs, en référence à la quantité d'absorbants ajoutée au flux de gaz d'échappement est mise en oeuvre.

5. Procédé selon l'une des revendications 1 à 4, **caractérisé en ce que** les inhibiteurs sont ajoutés au flux de gaz d'échappement, parallèlement aux absorbants.

6. Procédé selon l'une des revendications 1 à 4, **caractérisé en ce que** les inhibiteurs sont ajoutés au flux de gaz d'échappement, mélangés aux absorbants.

7. Procédé selon l'une des revendications 1 à 4, **caractérisé en ce que** les absorbants sont dopés avec des inhibiteurs avant la mise en contact avec le gaz d'échappement.

8. Procédé selon l'une des revendications 1 à 4, **caractérisé en ce que** les inhibiteurs sont injectés dans le flux de gaz d'échappement.

9. Procédé selon l'une des revendications 1 à 8, **caractérisé en ce que** seul le coke de lignite est employé comme absorbant.

10. Procédé selon l'une des revendications 1 à 9, **caractérisé en ce que** le coke de lignite est humidifié avec des inhibiteurs en phase aqueuse avant d'être en contact avec le flux de gaz d'échappement.

11. Procédé selon l'une des revendications 1 à 10, **caractérisé en ce que** les absorbants sont injectés dans le flux de gaz d'échappement, servant de vecteur, de sorte que l'adsorption des substances polluantes du gaz d'échappement s'effectue sous la forme d'un nuage de poussière en suspension des absorbants se trouvant dans le flux de gaz d'échappement, une partie au moins des absorbants chargés d'éléments polluants étant éliminée, la quantité des absorbants, leur surface spécifique et leur temps de séjour étant ajustés de sorte qu'une teneur résiduelle en substances polluantes, encore présente dans le flux de gaz d'échappement après élimination des absorbants, soit inférieure à la limite maximale autorisée.

12. Absorbant pour la purification à sec des gaz d'échappement non dépoussiérés au préalable, contenant des agents tensioactifs de la famille des charbons actifs et/ou coke de lignite, **caractérisé en** un additif au niveau des inhibiteurs de catalysation de 1 à 10 % en poids, de préférence de 1 à 2 % en poids, en référence à la quantité de charbons actifs et/ou de coke de lignite, en tant que composants non inertes, des inhibiteurs de catalysation étant des composés ou leurs progéniteurs formant des complexes avec des ions métalliques.

13. Absorbant selon la revendication 12, **caractérisé en ce que** les inhibiteurs de catalysation sont des composés ou leurs progéniteurs formant des complexes avec des ions cuivre et/ou des ions fer.

14. Absorbant selon l'une des revendications 12 ou 13, **caractérisé en ce que** sont prévues, comme inhibiteurs de catalysation, des amines ou des urées.

15. Absorbant selon l'une des revendications 12 à 14, **caractérisé en ce que** les composants non inertes sont dopés avec des inhibiteurs de catalysation, de préférence sous forme d'urées.

16. Absorbant selon l'une des revendications 12 à 15, **caractérisé en ce qu'**est prévu en tant que composant non inerte du coke de four à sole de lignite dopé avec des inhibiteurs de catalysation lors du conditionnement de l'eau.

17. Absorbant selon l'une des revendications 12 à 14, **caractérisé en ce que** les inhibiteurs de catalysation, en tant que substances sèches en poudre, sont mélangés intimement aux agents tensioactifs.
